# EUROPEAN PATENT SPECIFICATION

(11) **EP 2 546 447 B1**
(45) Date of publication and mention of the grant of the patent: **07.07.2021**
(21) Application number: 12275073.0
(22) Date of filing: 22.05.2012
(51) Int. Cl.: E05F 15/643, E05F 15/646

(54) **A motor vehicle with a sliding door and an actuation mechanism for the sliding door**
Kraftfahrzeug mit einer Schiebetür und einem Betätigungsmechanismus für die Schiebetür
Véhicule à moteur avec une porte coulissante et un mécanisme d'actionnement de porte coulissante

(30) Priority: 11.07.2011 GB 201111852
(43) Date of publication of application: 16.01.2013
(73) Proprietor: Ford Global Technologies, LLC, Dearborn, MI 48126 (US)
(72) Inventor: Sargeant, Heath, Upminster, RM14 3AB (GB); Ginn, David, Shoeberyness, Essex SS3 9SY (GB); Richardson, Rob, Chelmsford, Essex CM2 8RG (GB)
(74) Representative: Haseltine Lake Kempner LLP

(56) References cited:
- US-A1- 2005 001 568
- US-A1- 2009 107 048
- None

## Description

This invention relates to a motor vehicle with a door opening and closing mechanism for a sliding door of a motor vehicle.

It is well known to provide a motor vehicle with a side door that is movable between closed and open positions by a sliding motion.

It is further known from, for example, US patents 6,321,488 and 7,856,759 mechanisms for effecting such opening and closing by power means.

Document US 2005/0001568 discloses a power device for a vehicle sliding door for sliding a sliding door in a door-opening direction and in a door-closing direction.

Document US 2009/0107048 discloses an opening/closing apparatus for a vehicle, which has a door-lock mechanism. An output of a motor unit is transmitted to a drum having a planetary gear mechanism, and the slide door of the vehicle is driven by an open-side cable and a close-side cable wound around the drum.

It is a problem with such prior art mechanisms that opening and closing is effected through a drive train that includes small exposed gear wheels that are expensive to produce, noisy in operation and are liable to jam if debris becomes trapped therebetween.

It is an object of this invention to provide a door actuation mechanism for a sliding door that overcomes the problems associated with the prior art.

According to the invention there is provided a motor vehicle having a sliding door and a door actuation mechanism for the sliding door, the motor vehicle having a body structure including upper, lower, front and rear structural members defining a door aperture to be closed by the sliding door, the mechanism comprising a motor driving a door actuator attached to the sliding door, a first cable attached at one end to the door actuator and having a second end for attachment to one of the front and rear structural members forming part of the body structure of the motor vehicle so as to define a first cable run and a second cable attached at one end to the door actuator and having a second end for attachment to one of the front and rear structural members forming part of the body structure of the motor vehicle so as to define a second cable run, wherein a portion of each cable run from the door actuator runs in the same direction as the direction in which the respective cable moves the sliding door and the one of the respective front and rear structural members used for attachment of both of the second ends of the first and second cables to the body structure of the motor vehicle, wherein the first cable run comprises a first portion extending away from the door actuator to a first cable guide in the form of a pulley, the first cable guide located near a first end of the door, wherein the motor vehicle further comprises a rigid tube bent into a desired shape, wherein the rigid tube is configured to guide the path of the first cable for at least a significant part of the first portion of the first cable run.

The first cable may be used to move the door in a door opening direction and the second cable may be used to move the door in a door closing direction.

The first cable run may comprise a second portion extending from the first guide in the door opening direction for attachment to one of the respective front and rear structural members.

The first cable guide may be located near to a bottom end of the door.

The rigid tube may have a bore coated in a low friction material.

The second cable run may comprise a first portion extending away from the door actuator to a second cable guide located near a second end of the door and a second portion extending from the second guide in the door closing direction for attachment to one of the respective front and rear structural members.

The door maybe a rearwardly opening door, the first end of the door may be a front end of the door and the first cable guide may be located near to the front end of the door, the second end of the door may be a rear end of the door, the second cable guide may be located near to the rear end of the door and the rear structural member may be used for the attachment of the second ends of the first and second cables to the body structure of the motor vehicle.

Rotation of the motor in a first direction may cause the first cable to be retracted into the door actuator and the second cable to be reeled out from the door actuator so as to open the door and rotation of the motor in a second direction may cause the second cable to be retracted into the door actuator and the first cable to be reeled out from the door actuator so as to close the door.

The sliding door may comprise a door having an outer door panel and an inner door panel defining therebetween a door cavity, and the door actuator of the door actuation mechanism may be attached to the door within the door cavity.

The door may further comprise a first guide arm attached at one end to the door for guiding the door during opening and closing of the door, the first cable guide being attached near to a free end of the first guide arm.

The door may further comprise a second guide arm attached at one end to the door for guiding the door during opening and closing of the door, the second cable guide being attached near a free end of the second guide arm.

At least when the door is in an open position, the second cable guide may be attached to the second guide arm so as to project into a guide channel attached to a side panel of the motor vehicle.

The second cable run may comprise a first portion extending away from the door actuator unit to the second cable guide and a second portion extending from the second guide in the door closing direction for attachment to a respective one of the front and rear structural members and, at least when the door is in an open position, the second portion of the second cable run lies within the guide channel.

The second ends of the first and second cables may both be attached to a respective one of the front and rear structural members defining the door aperture over which the door travels when moving between the closed and open positions.

The at least one sliding door may be a rearwardly opening door and the second ends of the first and second cables for the respective door may both be attached to the rear structural member defining the door aperture for the respective sliding door.

The invention will now be described by way of example with reference to the accompanying drawing of which:-
Fig.1 is a pictorial representation of a motor vehicle having a sliding door shown in a part open position;
Fig.2 is a schematic side view of part of the motor vehicle shown in Fig.1 showing a door aperture with the sliding door removed;
Fig.3A is a schematic plan view of a door actuation mechanism according to a first aspect of the invention when the door is in a closed position;
Fig.3B is a schematic side view of the door actuation mechanism shown in Fig.3A;
Fig.4A is a schematic plan view of the door actuation mechanism shown in Fig.3A when the door is in an open position;
Fig.4B is a schematic side view of the door mechanism shown in Fig.4A;
Fig.5 is a scrap cross-section through a centre guide arm attached near to a rear end of the sliding door;
Fig.6 is a pictorial view from inside the motor vehicle with the body structure cut-away so as to show a lower guide arm in the position it adopts when the sliding door is in a closed position;
Fig.7 is a scrap pictorial view of the door actuation mechanism showing the relative positions of first and second cable guides when the sliding door is in the closed position; and
Fig.8 is a schematic representation of a door actuator and motor forming part of a door actuation mechanism according to said first aspect of the invention.

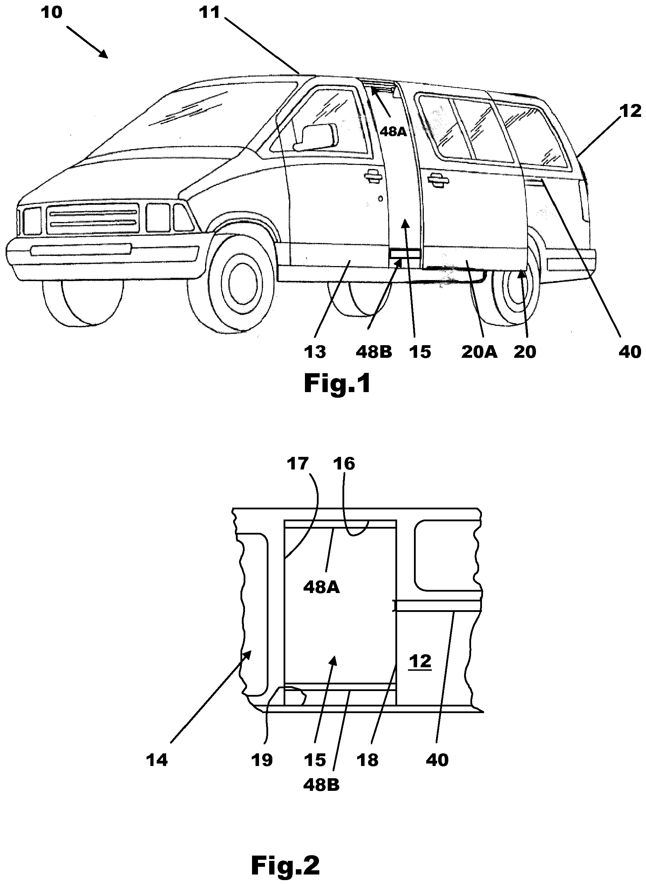

With particular reference to Figs.1 and 2 there is shown a motor vehicle 10 having a body structure 11 including a side panel 12. The motor vehicle 10 has a front door 13 which when closed overlies a front door aperture 14 and a second sliding door 20 which when closed overlies a second door aperture 15.

The second door aperture 15 is defined by various parts of the body structure 11 of the motor vehicle 10 in the form of an upper structural member 16, a front structural member in the form of a 'B' post 17, a rear structural member in the form of a 'C' post 18 and a lower structural member 19 which in combination define the door aperture 15 to be closed by the sliding door 20.

An upper guide channel 48A is attached to the body structure 11 at the top of the door aperture 15 by the upper structural member 16 and a lower guide channel 48B is attached to the body structure 11 at the bottom of the door aperture 15 by the lower structural member 19.

A centre or mid-guide channel 40 is attached to an external surface of the side panel 12 of the motor vehicle 10.

The upper, lower and centre guide channels 48A, 48B and 40 are used to guide the door 20 during opening and closing and are conventional in design and location. It will also be appreciated that various mechanisms are well known in the art for attaching a sliding door to such guide channels and that for the purposes of this description these devices will be referred to generically as guide arms. It will further be appreciated that Figs.1 and 2 are diagrammatic and do not necessarily show the size and positioning of the guide channels as they would appear in practice. One example of a guide channel arrangement for a sliding door can be found in PCT publication WO 2008/025827 but many other examples exist and the invention is not limited to use with a specific door guidance mechanism.

It will be appreciated that the guide arms and guide channels cooperate to guide the door not only forwardly and rearwardly but also to move the door outwardly from the door aperture when opening commences and inwardly at the end of a closing operation.

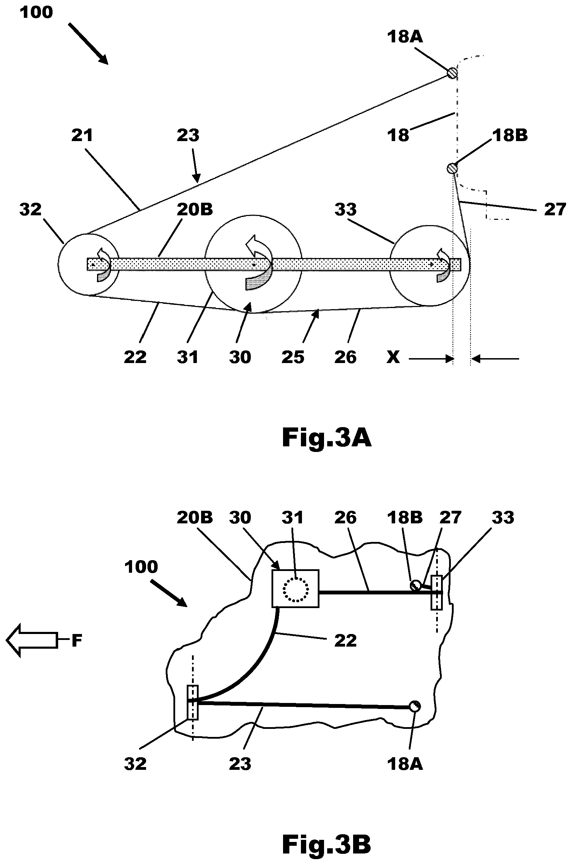

Referring now to Figs. 3A to 4B a door actuation mechanism 100 is shown schematically.

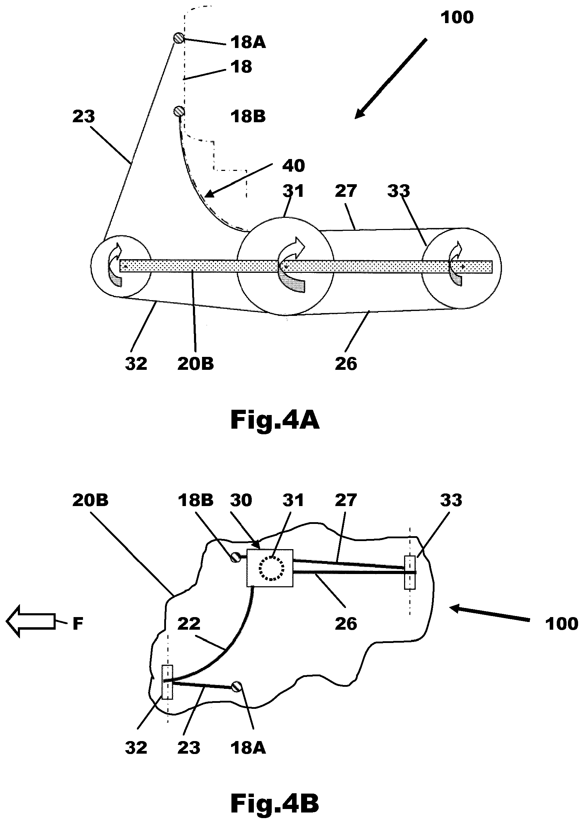

The Figs.3A and 3B show the position of various components when the door 20 is in a closed position and the Figs.4A and 4B show the position of the same components when the door 20 is in an open position. The arrows 'F' on Figs.3B and 4B show the direction of the front of the motor vehicle 10 and so movement of the door in the direction of the arrows 'F' will be referred to herein as forward or forwardly and direction of the door in an opposite direction will be referred to as rearward or rearwardly.

The door 20 is conventional in design and comprises of an outer panel 20A and an inner panel 20B secured together to define a door cavity in which a door actuator 30 is mounted by in this case attachment to part of the inner door panel 20B. One example of such a door construction is shown in European Patent 2006134.

The door actuator 30 is driven by a motor 60 (not shown in Figs. 3A to 4B) and is operatively connected to first and second actuation cables 23, 25.

The first cable 23 is attached at one end to the door actuator 30 and is adapted for attachment at a second end to part of the body structure 11 of the motor vehicle 10 in the form of the 'C' post 18 by means of an anchor 18A so as to define a first cable run.

The first cable run comprises a first portion 21 extending away from the door actuator 30 to a first cable guide in the form of a pulley 32 located near a front end of the door 20 and a second portion 21 extending from the pulley 32 in the door opening direction for attachment to the anchor 18A.

The second cable 25 is attached at one end to the door actuator 30 and is adapted for attachment to the 'C' post at a second end by means of an anchor 18B so as to define a second cable run.

The second cable run comprises a first portion 26 extending away from the door actuator 30 to a second cable guide in the form of a pulley 33 located near a rear end of the door 20 and a second portion 27 extending from the pulley 33 in a door closing direction for attachment to the 'C' post by means of the anchor 18B.

One of the features of the invention is that the second portions 21, 27 of the first and second cables 23 and 25 always extend from their respective guides 32, 33 in the same direction as the direction of motion they cause to occur. That is to say, for a door that slides towards the rear of the motor vehicle 10, the second portion 21 of the first cable 23 always extends rearwardly from the pulley 32 irrespective of the position of the door 20 and the second portion 27 of the second cable 25 always extends forwardly from the pulley 33 irrespective of the position of the door 20. On Fig.3A the forward extension of the second portion 27 of the second cable 25 is shown as extending forwardly a distance 'X' from the position where it feeds off of the pulley 33. It will be appreciated that this distance 'X' can in practice be very small but not negative.

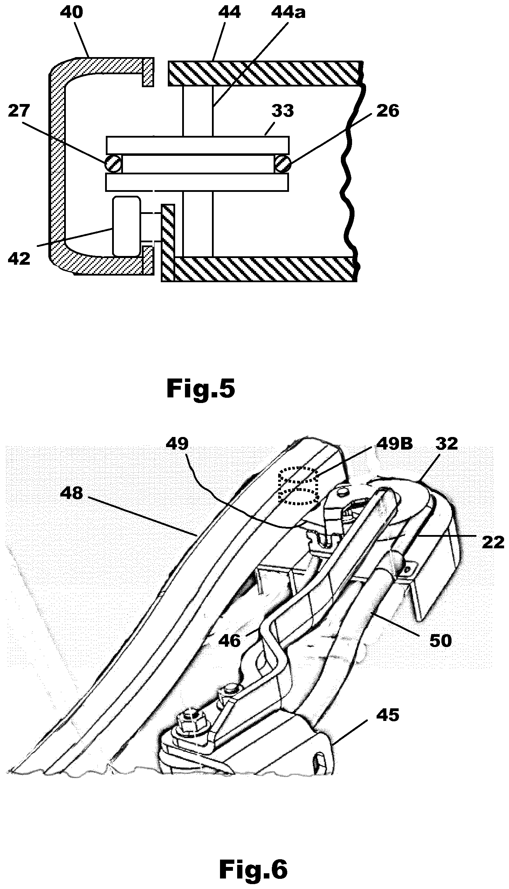

For simplicity of illustration the first guide in the form of the pulley 32 and the second guide in the form of the pulley 33 are both shown as being rotatably attached to the inner door panel 20B but in practice they are attached to guide arms 46, 44 (see Figs. 5 and 6) connected to the inner door panel 20B.

In Figs. 3A and 4A the door actuator 30 is shown having a spool 31 for the two cables 23, 25 arranged vertically and in Figs. 3B and 4B the same spool 31 is shown horizontally arranged, this difference illustrates that the orientation of the spool 31 can be in either of these directions and that the invention is not limited to a specific spool orientation. In practice and as referred to later two separate but synchronised spools may be used instead of a single spool 31. Similarly, although the two pulleys 32, 33 are shown to be rotatable about vertical axes, this need not be the case and horizontal axes of rotation could be used. Furthermore, the first and second guides need not be in the form of pulleys, low friction U-shaped fixed guides could be used but pulleys are preferred due to the lower resistance to motion that is produced by the use of such devices compared to a fixed guide.

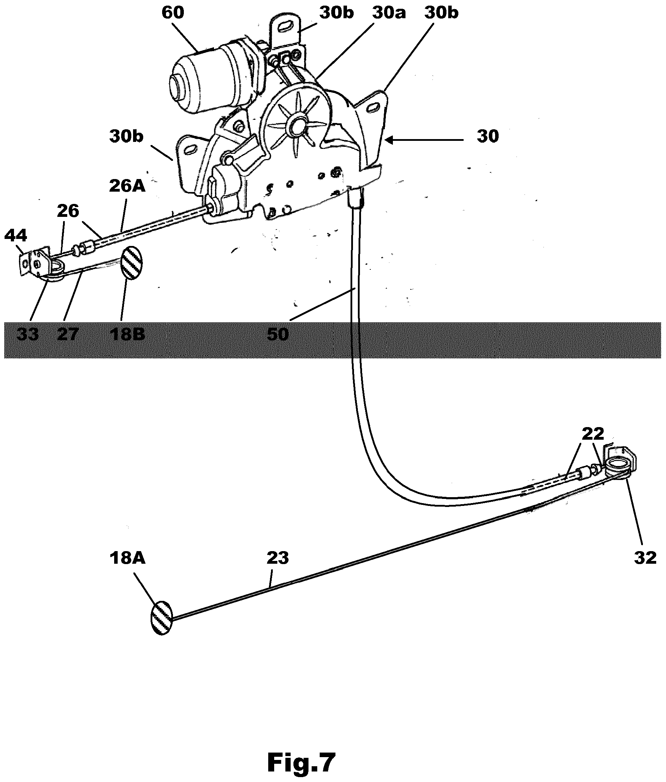

Referring now to Fig.7, which shows one embodiment of the invention when the door 20 is in a fully closed position, the door actuator 30 is driven by the motor 60 and includes a housing 30a including brackets 30b to mount the door actuator 30 to the inner door panel 20B.

The first cable 23 extends away from the actuator housing 30a and is slidingly located in a rigid tube 50 that is bent to a desired shape and which in use guides the path of the first cable 23 for a significant part of the first portion 22 of its run from the door actuator 30 to the front guide in the form of the pulley 32. The tube 50 in this case is a steel tube having a bore coated with a low friction material such as P.T.F.E but it will be appreciated that other materials could be used for the tube 50 and the coating. The use of such a tube has the advantages that the first cable 23 can be routed from the door actuator 30 which is mounted up in the door cavity to the bottom of the door without requiring the use of a complex pulley system and secondly that the first portion 22 of the first cable 23 is protected for much of it run within the door cavity.

The first portion 26 of the second cable run is also in this case protected by a protective sleeve 26A so that the second cable 25 takes the form of a Bowden cable up to the second guide formed by the pulley 33.

The second guide in the form of the pulley 33 is connected to the door structure via a centre guide arm 44 shown in more detail in Fig.5.

The centre guide arm 44 is attached at one end to the door 20 for guiding the door 20 during opening and closing of the door by means of a roller 42. The second cable guide in the form of the pulley 33 is rotatably attached near a free end of the second guide arm 44 by means of a spindle 44a. The pulley 33 is attached to the second guide arm 44 so as to project into the centre guide channel 40 which is attached to the external surface of the side panel 12 of the motor vehicle 10.

When the door 20 is moved from its closed position towards the open position the second portion 27 of the second cable run is fed out into the centre guide channel 40 so that the second portion 27 of the second cable run lies within the centre guide channel 40. However, when the door 20 is moved to the closed position the second portion 27 moves with the pulley 33 and the door 20 so that the centre guide channel 40 is left empty when the door 20 is in the closed position. Therefore, irrespective of whether the door 20 is open or closed, the second cable run is always concealed from view by the door 20.

Referring now to Fig.6 there is shown one embodiment of a first or lower guide arm 46. The lower guide arm 46 is attached at one end by means of a bracket 45 to a bottom end of the door 20 for guiding the door 20 during opening and closing. The guide arm 46 includes a guide plate 49 on which is rotatably mounted a guide roller 49B (shown as a dotted outline on Fig.6) and the pulley 32 is rotatably attached near to a free end of the first guide arm 46.

The guide roller 49B is engaged with the lower guide channel 48B so as to guide and support the bottom end of the door 20.

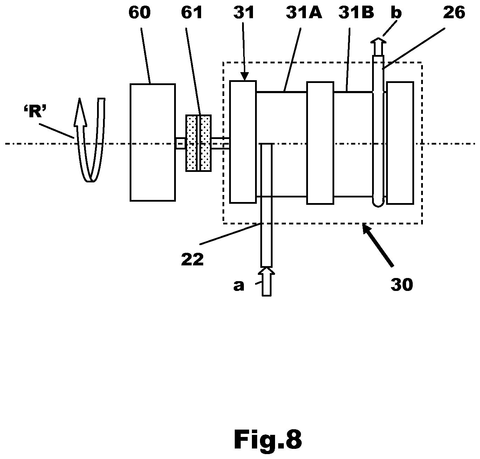

With reference to Fig.8 there is shown in a schematic form the door actuator 30 and the drive motor 60 for the door actuator 30.

The motor 60 drives the door actuator 30 via a clutch 61. The clutch 61 is overcome when a predefined torque is applied to it from the door actuator 30 thereby allowing the door 20 to be manually opened and closed if required for any reason.

The door actuator 30 comprises first and second drive spools 31A and 31B driven by the motor 60. One end of the first portion 22 of the first cable 23 is attached to the first drive spool 31A and one end of the first portion 26 of the second cable 25 is attached to the second drive spool 31B. In the example shown the first and second drive spools 31A and 31B are formed as a single combined drive spool but this need not be the case and separate synchronised spools could be used.

The first cable 23 is wound round the first spool 31A in the opposite direction to the direction the second cable 25 is wound in. In the example shown, when viewed from the motor 60 end, the first cable 23 is wound around the first spool 31A in a clockwise direction and the second cable 25 is wound around the second spool 31B in an anti-clockwise direction.

Therefore, given the cable layout shown in Figs.3A to 4B, rotation of the motor 60 in a first or anti-clock wise direction as shown by the arrow 'R' on Fig.8 causes the first cable 23 to be retracted into the door actuator 30 as indicated by the arrow 'a' and the second cable 25 to be reeled out as indicated by the arrow 'b' from the door actuator 30 so as to open the door 20.

Similarly, rotation of the motor in a second or clockwise direction causes the second cable 25 to be retracted into the door actuator 30 and the first cable 23 to be reeled out from the door actuator 30 so as to close the door 20.

It will be appreciated that the door 20 will also be provided with various locks and latches but these are of a conventional construction and so are not shown or described.

Operation of the door actuating mechanism in use is occupant controlled by means of a switch or switches. When the door 20 is required to be opened an occupant operates the appropriate switch causing the motor 60 to rotate in the door opening direction thereby retracting the first cable 23 which pulls the door 20 rearwards thereby opening it. When the door 20 is to be closed, an occupant operates the appropriate switch causing the motor 60 to rotate in a door closing direction thereby retracting the second cable 25 and pulling the door 20 forwardly into the closed position. It will be appreciated that anti-trap or anti-pinch devices will be fitted to the front end of the door 20 to prevent injury should a body part become interposed between the closing door 20 and the 'B' post 17 and that overload protection will be provided for the motor 60.

One advantage of the invention is that it can be used with most known manual sliding door configurations to convert them to a powered form. That is to say, very few modifications have to be made to the vehicle to adapt it from a manual sliding door vehicle to a powered sliding door vehicle. In particular, all of the main operational components of the door actuating mechanism are mounted within the door and no modifications are required to the body structure apart from the provision of anchors for the first and second cables.

A further advantage of the invention is that it is of a simple construction and can be manufactured in an economical manner.

Another advantage of the invention is that it is quiet in operation and less prone to damage due to the fact that the major components are housed within the door cavity.

Yet one more advantage is that the first and second cables can easily be concealed from view so that they are not visible to a user of the motor vehicle.

Although the invention has been shown and described with respect to an arrangement in which the door opening cable is located near a bottom end of the door it will be appreciated that it could be located near to a top end of the door provide no window is located in the upper half of the door. That is to say if the motor vehicle is a panel van or light truck the door opening cable could be located at the top or bottom of the door.

Similarly, although the invention has been shown and described with respect to an arrangement in which the door closing cable is located in the centre of the door, it will be appreciated that it could be located near to a top or bottom end of the door provided an external body mounted door guide channel is located in that position and that no window is located in the upper half of the door. That is to say if the motor vehicle is a panel van or light truck the door closing cable could be located in the centre of the door, at the top of the door or at the bottom of the door.

However, the disclosed arrangement for the opening and closing cables is preferred due to ease of packaging and the fact that a window may be provided in the upper half of the door.

It will also be appreciated that the motor vehicle 10 could have a sliding door fitted with a door actuating mechanism on both sides or on only one side.

Although in most cases the door will be required to slide rearwardly to open it, those skilled in the art will appreciate that the door could be arranged to open by sliding in a forwardly direction and that in this case the mechanism would be a mirror image of that shown in Figs. 3A to 4B with the first and second cables being attached via anchors to the 'B' post and not the 'C' post.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A motor vehicle (10) having a sliding door (20) and a door actuation mechanism (100) for the sliding door (20), the motor vehicle (10) having a body structure (11) including upper, lower, front and rear structural members (16, 19, 17 and 18) defining a door aperture (15) to be closed by the sliding door (20), the mechanism (100) comprising a motor (60) driving a door actuator (30) attached to the sliding door (20), a first cable (23) attached at one end to the door actuator (30) and having a second end for attachment to one of the front and rear structural members (17 and 18) forming part of the body structure (11) of the motor vehicle (10) so as to define a first cable run, and a second cable (25) attached at one end to the door actuator (30) and having a second end for attachment to one of the front and rear structural members (17 and 18) forming part of the body structure (11) of the motor vehicle (10) so as to define a second cable run, wherein a portion (21, 27) of each cable run from the door actuator (30) runs in the same direction as the direction in which the respective cable (23, 25) moves the sliding door (20) and that the same one of the respective front and rear structural members (17 and 18) is used for attachment of both of the second ends of the first and second cables (23 and 25) to the body structure (11) of the motor vehicle (10), wherein the first cable run comprises a first portion (22) extending away from the door actuator (30) to a first cable guide (32), in the form of a pulley, the first cable guide located near a first end of the door (20), **characterised in that** the motor vehicle further comprises a rigid tube (50) bent into a desired shape, wherein the rigid tube is configured to guide the path of the first cable (23) for a significant part of the first portion (22) of the first cable run.

2. A motor vehicle as claimed in claim 1 wherein the first cable (23) is used to move the door (20) in a door opening direction and the second cable (25) is used to move the door (20) in a door closing direction.

3. A motor vehicle as claimed in claim 2 wherein the first cable comprises a second portion (21) extending from the first guide (32) in the door opening direction for attachment to one of the respective front and rear structural members (17 and 18).

4. A motor vehicle as claimed in any of the preceding claims wherein the second cable run comprises a first portion (26) extending away from the door actuator (30) to a second cable guide (33) located near a second end of the door (20) and a second portion (27) extending from the second cable guide (33) in the door closing direction for attachment to one of the respective front and rear structural members (17 and 18).

5. A motor vehicle as claimed in claim 4 wherein the door is a rearwardly opening door (20), the first end of the door (20) is a front end of the door (20) and the first cable guide (32) is located near to the front end of the door (20), the second end of the door (20) is a rear end of the door (20), the second cable guide (33) is located near to the rear end of the door (20), and the rear structural member (18) is used for the attachment of the second ends of the first and second cables (23 and 25)to the body structure (11) of the motor vehicle (10).

6. A motor vehicle as claimed in any of claims 1 to 5 wherein the sliding door comprises a door (20) having an outer door panel (20A) and an inner door panel (20B) defining therebetween a door cavity, and the door actuator (30) of the door actuation mechanism (100) is attached to the door (20) within the door cavity.

7. A motor vehicle as claimed in claim 6, when dependent upon any of claims 3 to 5 in which the door further comprises a first guide arm (46) attached at one end to the door (20) for guiding the door (20) during opening and closing of the door (20), wherein the first cable guide (32) is attached near to a free end of the first guide arm (46) .

8. A motor vehicle as claimed in claim 6 when claim 6 is dependent upon claim 4 or upon claim 5 in which the door (20) further comprises a second guide arm (44) attached at one end to the door (20) for guiding the door (20) during opening and closing of the door (20), wherein the second cable guide (33) is attached near a free end of the second guide arm (44).

9. A motor vehicle as claimed in claim 8 wherein, at least when the door (20) is in an open position, the second cable guide (33) is attached to the second guide arm (44) so as to project into a guide channel (40) attached to a side panel (12) of the motor vehicle (10).

10. A motor vehicle as claimed in claim 9 in which the second cable run comprises a first portion (26) extending away from the door actuator (30) to the second cable guide (33) and a second portion (27) extending from the second cable guide (33) in the door closing direction for attachment to a respective one of the front and rear structural members (17 and 18) wherein, at least when the door (20) is in an open position, the second portion (27) of the second cable run lies within the guide channel (40).

11. A motor vehicle as claimed in claim 1 wherein the second ends of the first and second cables (23 and 25) are both attached to a respective one of the front and rear structural members (17 and 18) defining the door aperture (15) over which the door (20) travels when moving between the closed and open positions.

## Patentansprüche

1. Kraftfahrzeug (10), das eine Schiebetür (20) und einem Türbetätigungsmechanismus (100) für die Schiebetür (20) aufweist, wobei das Kraftfahrzeug (10) eine Karosseriestruktur (11) aufweist, die ein oberes, ein unteres, ein vorderes und ein hinteres Strukturelement (16, 19, 17 und 18) beinhaltet, die eine Türöffnung (15) definieren, die durch die Schiebetür (20) zu schließen ist, der Mechanismus umfassend einen Motor (60), der ein Türstellglied (30) antreibt, das an der Schiebetür (20) angebracht ist, ein erstes Kabel (23), das an einem Ende an dem Türstellglied (30) angebracht ist und ein zweites Ende zum Anbringen an einem von dem vorderen und dem hinteren Strukturelement (17 und 18) aufweist, die Teil der Karosseriestruktur (11) des Kraftfahrzeugs (10) bilden, um einen ersten Kabelweg zu definieren, und ein zweites Kabel (25), das an einem Ende an dem Türstellglied (30) angebracht ist und ein zweites Ende zum Anbringen an einem von dem vorderen und dem hinteren Strukturelement (17 und 18) aufweist, die Teil der Karosseriestruktur (11) des Kraftfahrzeugs (10) bilden, um einen zweiten Kabelweg zu definieren, wobei ein Abschnitt (21, 27) von jedem Kabelweg von dem Türstellglied (30) in dieselbe Richtung verläuft wie die Richtung, in der das jeweilige Kabel (23, 25) die Schiebetür (20) bewegt, und dass dasselbe des jeweiligen vorderen und hinteren Strukturelements (17 und 18) zum Anbringen der zwei zweiten Enden des ersten und des zweiten Kabels (23 und 25) an der Karosseriestruktur (11) des Kraftfahrzeugs (10) verwendet wird, wobei der erste Kabelweg einen ersten Abschnitt (22) umfasst, der sich weg von dem Türstellglied (30) zu einer ersten Kabelführung (32) in Form einer Umlenkrolle erstreckt, wobei sich die erste Kabelführung in der Nähe eines ersten Endes der Tür (20) befindet, **dadurch gekennzeichnet, dass** das Kraftfahrzeug ferner ein starres Rohr (50) umfasst, das in eine gewünschte Form gebogen ist, wobei das starre Rohr konfiguriert ist, um den Verlauf des ersten Kabels (23) über einen wesentlichen Teil des ersten Abschnitts (22) des ersten Kabelwegs zu führen.

2. Kraftfahrzeug gemäß Anspruch 1, wobei das erste Kabel (23) verwendet wird, um die Tür (20) in eine Türöffnungsrichtung zu bewegen, und das zweite Kabel (25) verwendet wird, um die Tür (20) in eine Türschließrichtung zu bewegen.

3. Kraftfahrzeug gemäß Anspruch 2, wobei das erste Kabel einen zweiten Abschnitt (21) umfasst, der sich von der ersten Führung (32) in die Türöffnungsrichtung zum Anbringen an einem der jeweiligen von dem vorderen und dem hinteren Strukturelement (17 und 18) erstreckt.

4. Kraftfahrzeug gemäß einem der vorherigen Ansprüche, wobei der zweite Kabelweg einen ersten Abschnitt (26), der sich weg von dem Türstellglied (30) zu einer zweiten Kabelführung (33) erstreckt, die sich in der Nähe eines zweiten Endes der Tür (20) befindet, und einen zweiten Abschnitt (27), der sich von der zweiten Kabelführung (33) in Türschließrichtung zum Anbringen an einem jeweiligen von dem vorderen und dem hinteren Strukturelement (17 und 18) erstreckt, umfasst.

5. Kraftfahrzeug gemäß Anspruch 4, wobei die Tür eine nach hinten öffnende Tür (20) ist, das erste Ende der Tür (20) ein vorderes Ende der Tür (20) ist und sich die erste Kabelführung (32) in der Nähe des vorderen Endes der Tür (20) befindet, das zweite Ende der Tür (20) ein hinteres Ende der Tür (20) ist, sich die zweite Kabelführung (33) in der Nähe des hinteren Endes der Tür (20) befindet, und das hintere Strukturelement (18) zum Anbringen der zweiten Enden von dem ersten und dem zweiten Kabel (23 und 25) an der Karosseriestruktur (11) des Kraftfahrzeugs (10) verwendet wird.

6. Kraftfahrzeug gemäß einem der Ansprüche 1 bis 5, wobei die Schiebetür eine Tür (20) umfasst, die eine äußere Türplatte (20A) und eine innere Türplatte (20B) aufweist, die dazwischen einen Türhohlraum definieren, und das Türstellglied (30) des Türbetätigungsmechanismus (100) innerhalb des Türhohlraums an der Tür (20) angebracht ist.

7. Kraftfahrzeug gemäß Anspruch 6, wenn abhängig von einem der Ansprüche 3 bis 5, bei dem die Tür ferner einen ersten Führungsarm (46) umfasst, der an einem Ende an der Tür (20) angebracht ist, um die Tür (20) während des Öffnens und Schließens der Tür (20) zu führen, wobei die erste Kabelführung (32) in der Nähe eines freien Endes des ersten Führungsarms (46) angebracht ist.

8. Kraftfahrzeug gemäß Anspruch 6, wenn Anspruch 6 abhängig ist von Anspruch 4 oder von Anspruch 5, bei dem die Tür (20) ferner einen zweiten Führungsarm (44) umfasst, der an einem Ende an der Tür (20) angebracht ist, um die Tür (20) während des Öffnens und Schließens der Tür (20) zu führen, wobei die zweite Kabelführung (33) in der Nähe eines freien Endes des zweiten Führungsarms (44) angebracht ist.

9. Kraftfahrzeug gemäß Anspruch 8, wobei, mindestens wenn die Tür (20) in einer geöffneten Position ist, die zweite Kabelführung (33) an dem zweiten Führungsarm (44) angebracht ist, um in einen Führungskanal (40) hervorzustehen, der an einer seitlichen Platte (12) des Kraftfahrzeugs (10) angebracht ist.

10. Kraftfahrzeug gemäß Anspruch 9, bei dem der zweite Kabelweg einen ersten Abschnitt (26), der sich weg von dem Türstellglied (30) zu der zweiten Kabelführung (33) erstreckt, und einen zweiten Abschnitt (27), der sich von der zweiten Kabelführung (33) in Türschließrichtung zum Anbringen an einem jeweiligen von dem vorderen und dem hinteren Strukturelement (17 und 18) erstreckt, umfasst, wobei, mindestens wenn die Tür (20) in einer geöffneten Position ist, der zweite Abschnitt (27) des zweiten Kabelwegs innerhalb des Führungskanals (40) liegt.

11. Kraftfahrzeug gemäß Anspruch 1, wobei die zweiten Enden des ersten und des zweiten Kabels (23 und 25) beide an einem jeweiligen von dem vorderen und dem hinteren Strukturelement (17 und 18) angebracht sind, die die Türöffnung (15) definieren, über die sich die Tür (20) bewegt, wenn sie zwischen der geschlossenen und der offenen Position bewegt wird.

## Revendications

1. Véhicule à moteur (10) présentant une porte coulissante (20) et un mécanisme d'actionnement de porte (100) destiné à la porte coulissante (20), le véhicule à moteur (10) présentant une structure de carrosserie (11) notamment des éléments structuraux supérieur, inférieur, avant et arrière (16, 19, 17 et 18) définissant une ouverture de porte (15) devant être fermée par la porte coulissante (20), le mécanisme (100) comprenant un moteur (60) entraînant un actionneur de porte (30) fixé à la porte coulissante (20), un premier câble (23) fixé à une extrémité à l'actionneur de porte (30) et présentant une seconde extrémité destinée à être fixée à l'un des éléments structuraux avant et arrière (17 et 18) faisant partie de la structure de carrosserie (11) du véhicule à moteur (10) de manière à définir un premier chemin de câble, et un second câble (25) fixé à une extrémité à l'actionneur de porte (30) et présentant une seconde extrémité destinée à être fixée à l'un des éléments structuraux avant et arrière (17 et 18) faisant partie de la structure de carrosserie (11) du véhicule à moteur (10) de manière à définir un second parcours de câble, dans lequel une partie (21, 27) de chaque parcours de câble provenant de l'actionneur de porte (30) s'étend dans la même direction que la direction dans laquelle le câble respectif (23, 25) déplace la porte coulissante (20) et en ce que le même des éléments structuraux avant et arrière respectifs (17 et 18) est utilisé pour la fixation des deux secondes extrémités des premier et second câbles (23 et 25) à la structure de carrosserie (11) du véhicule à moteur (10), dans lequel le premier parcours de câble comprend une première partie (22) s'étendant à l'opposé de l'actionneur de porte (30) vers un premier guide-câble (32), sous la forme d'une poulie, le premier guide-câble étant situé à proximité d'une première extrémité de la porte (20), **caractérisé en ce que** le véhicule à moteur comprend en outre un tube rigide (50) cintré dans une forme souhaitée, dans lequel le tube rigide est conçu pour guider le trajet du premier câble (23) pour une partie significative de la première partie (22) du premier parcours de câble.

2. Véhicule à moteur selon la revendication 1, dans lequel le premier câble (23) est utilisé pour déplacer la porte (20) dans une direction d'ouverture de porte et le second câble (25) est utilisé pour déplacer la porte (20) dans une direction de fermeture de porte.

3. Véhicule à moteur selon la revendication 2, dans lequel le premier câble comprend une seconde partie (21) s'étendant depuis le premier guide (32) dans la direction d'ouverture de porte destinée à la fixation à l'un des éléments structuraux avant et arrière respectifs (17 et 18).

4. Véhicule à moteur selon l'une quelconque des revendications précédentes, dans lequel le second parcours de câble comprend une première partie (26) s'étendant à l'opposé de l'actionneur de porte (30) vers un second guide-câble (33) situé à proximité d'une seconde extrémité de la porte (20) et une seconde partie (27) s'étendant à partir du second guide-câble (33) dans la direction de fermeture de porte destiné à la fixation à l'un des éléments structuraux avant et arrière respectifs (17 et 18).

5. Véhicule à moteur selon la revendication 4, dans lequel la porte est une porte s'ouvrant vers l'arrière (20), la première extrémité de la porte (20) est une extrémité avant de la porte (20) et le premier guide-câble (32) est situé près de l'extrémité avant de la porte (20), la seconde extrémité de la porte (20) est une extrémité arrière de la porte (20), le second guide-câble (33) est situé près de l'extrémité arrière de la porte (20), et l'élément structural arrière (18) est utilisé pour la fixation des secondes extrémités des premier et second câbles (23 et 25) à la structure de carrosserie (11) du véhicule à moteur (10).

6. Véhicule à moteur selon l'une quelconque des revendications 1 à 5, dans lequel la porte coulissante comprend une porte (20) présentant un panneau de porte extérieur (20A) et un panneau de porte intérieur (20B) définissant entre eux une cavité de porte et l'actionneur de porte (30) du mécanisme d'actionnement de porte (100) est fixé à la porte (20) à l'intérieur de la cavité de porte.

7. Véhicule à moteur selon la revendication 6, lorsqu'il dépend de l'une quelconque des revendications 3 à 5, dans lequel la porte comprend en outre un premier bras de guidage (46) fixé à une extrémité à la porte (20) destiné à guider la porte (20) pendant l'ouverture et la fermeture de la porte (20), dans lequel le premier guide-câble (32) est fixé près d'une extrémité libre du premier bras de guidage (46)

8. Véhicule à moteur selon la revendication 6, lorsque la revendication 6 dépend de la revendication 4 ou de la revendication 5, dans lequel la porte (20) comprend en outre un second bras de guidage (44) fixé à une extrémité à la porte (20) destiné à guider la porte (20) pendant l'ouverture et la fermeture de la porte (20), dans lequel le second guide-câble (33) est fixé près d'une extrémité libre du second bras de guidage (44).

9. Véhicule à moteur selon la revendication 8, dans lequel, au moins lorsque la porte (20) est dans une position ouverte, le second guide-câble (33) est fixé au second bras de guidage (44) de manière à faire saillie dans un canal de guidage (40) fixé à un panneau latéral (12) du véhicule à moteur (10).

10. Véhicule à moteur selon la revendication 9, dans lequel le second parcours de câble comprend une première partie (26) s'étendant à l'opposé de l'actionneur de porte (30) vers le second guide-câble (33) et une seconde partie (27) s'étendant à partir du second guide-câble (33) dans la direction de fermeture de porte destinées à la fixation à un élément respectif des éléments structuraux avant et arrière (17 et 18), dans lequel, au moins lorsque la porte (20) est dans une position ouverte, la seconde partie (27) du second parcours de câble se trouve à l'intérieur du canal de guidage (40).

11. Véhicule à moteur selon la revendication 1, dans lequel les secondes extrémités des premier et second câbles (23 et 25) sont à la fois fixées à l'un respectif parmi les éléments structuraux avant et arrière (17 et 18) définissant l'ouverture de porte (15) sur laquelle la porte (20) se déplace lorsqu'elle se déplace entre les positions fermée et ouverte.
